Europäisches Patentamt

European Patent Office

Office européen des brevets

(19)

(11) Numéro de publication : **0 318 360 B1**

# FASCICULE DE BREVET EUROPEEN

(12)

(45) Date de publication du fascicule du brevet :
**22.01.92 Bulletin 92/04**

(51) Int. Cl.⁵ : **B23B 31/16**

(21) Numéro de dépôt : **88402885.3**

(22) Date de dépôt : **17.11.88**

(54) **Mandrin de serrage pour machine-outil.**

(30) Priorité : **24.11.87 FR 8716243**

(43) Date de publication de la demande :
**31.05.89 Bulletin 89/22**

(45) Mention de la délivrance du brevet :
**22.01.92 Bulletin 92/04**

(84) Etats contractants désignés :
**DE ES FR GB IT**

(56) Documents cités :
**EP-A- 0 070 985**
**EP-A- 0 070 987**
**DE-A- 2 240 871**

(56) Documents cités :
**DE-A- 3 434 308**
**FR-A- 2 306 038**
**US-A- 3 682 491**
**US-A- 3 744 808**

(73) Titulaire : **GAMET PRECISION**
**Route d'Epégard**
**F-27110 Le Neubourg (FR)**

(72) Inventeur : **Theodolin, Georges**
**31 Rue Molière**
**F-92500 Rueil-Malmaison (FR)**

(74) Mandataire : **Colas, Jean-Pierre et al**
**Cabinet de Boisse 37, avenue Franklin D.**
**Roosevelt**
**F-75008 Paris (FR)**

EP 0 318 360 B1

## Description

La présente invention est relative à un mandrin de serrage pour machine-outil selon le préambule des revendications 1 et 2, voir DE-A-3434308.

On connaît depuis longtemps de tels mandrins, dont chaque mors comporte une pièce de support montée coulissante dans une glissière radiale du corps de mandrin, une pièce de serrage montée coulissante dans une glissière radiale du corps ou de la pièce de support, un pêne mobile axialement dans la pièce de support et pourvu de dents capables de venir coopérer avec une denture de la pièce de serrage pour immobiliser cette dernière par rapport à la pièce de support, un organe d'actionnement mobile par rapport à la pièce de support et capable de passer d'une première position, où il maintient le pêne en situation de coopération avec la denture de la pièce de serrage, à une seconde position, où il maintient le pêne en situation de désaccouplement par rapport à la pièce de serrage, le mandrin comprenant en outre une bague de commande, qui peut opérer un coulissement axial, et des moyens pour transformer ce coulissement axial en un déplacement radial des pièces de support des mors par rapport au corps de mandrin. De tels mandrins sont décrits par exemple dans US-A-3.682.491. Ils permettent un changement rapide de pièces de serrage, ou l'adaptation rapide de celles-ci à des pièces à travailler de dimensions différentes.

De tels mandrins présentent, par leur structure, un risque : pendant l'opération de changement ou de déplacement d'une pièce de serrage, une fausse manoeuvre peut actionner la bague de commande, ce qui peut endommager l'outillage, ou même blesser le personnel qui est en train d'opérer. Des sécurités électriques ou autres sont bien entendu prévues, mais il n'en reste pas moins qu'un accident peut survenir, par suite d'une imprudence ou d'un mauvais fonctionnement des dispositifs de sécurité.

On a propose, dans DE-A-3434308, un organe d'actionnement comportant une partie de blocage qui coopère avec une partie de forme complémentaire de la bague de commande, en pratique une saillie de l'organe d'actionnement qui pénètre dans une cavité de la bague de commande, ces deux parties coopérant lorsque l'organe d'entraînement est dans la seconde position, c'est-à-dire lors du désaccouplement de la pièce de serrage, et la bague de commande dans la position correspondante, si bien que le déplacement de l'organe d'actionnement n'est possible que dans une position définie de la bague de commande.

Selon ce document, la commande du pêne est réalisée à l'aide d'une surface de came rectiligne oblique par rapport à la direction radiale, portée par l'organe de commande. Il en resulte une imprécision sur la situation relative des moments où le pêne est désaccouplé et où la bague de commande est bloquée, ce qui peut être source d'accident.

La présente invention a pour but de remédier à cet inconvénient.

L'invention fournit en conséquence un mandrin de serrage pour machine-outil, dont chaque mors comporte :

— une pièce de support montée coulissante dans une glissière radiale du corps du mandrin,

— une pièce de serrage montée coulissante dans une glissière radiale du corps ou de la pièce de support,

— un pêne mobile axialement dans la pièce support et pourvu de dents capables de coopérer avec une denture de la pièce de serrage pour immobiliser cette dernière par rapport à la pièce de support,

— un organe d'actionnement mobile par rapport à la pièce de support et capable de passer, par un mouvement radial, d'une première position, où il maintient le pêne en situation de coopération avec la denture de la pièce de serrage, à une seconde position, où il maintient le pêne en situation de désaccouplement par rapport à la pièce de serrage, le pêne étant déplacé à l'aide d'une surface de came oblique par rapport à la direction radiale,

— le mandrin comprenant en outre une bague de commande qui peut opérer un coulissement axial, et des moyens pour transformer ce coulissement axial en déplacement radial des pièces de support des mors par rapport au corps du mandrin,

— et l'organe d'actionnement comportant une partie de blocage qui coopère avec une partie de forme complémentaire de la bague de commande, ces deux parties coopérant lorsque l'organe d'entraînement est dans la seconde position, et la bague de commande dans la position correspondante, pour empêcher le coulissement de ladite bague,

— le mouvement de l'organe d'actionnement pour passer de la première position à la seconde position comprenant une première phase, dans laquelle la partie de blocage vient coopérer avec la partie complémentaire de la bague de commande, pour empêcher le coulissement de ladite bague, alors que le pêne est toujours maintenu en position, puis une seconde phase, dans laquelle il amène le pêne en situation de désaccouplement,

— le mouvement pour passer de la seconde position à la première comprenant, de façon correspondante, une phase de désaccouplement du pêne suivie d'une phase de libération de la bague de commande,

caractérisé en ce que ladite surface de came comporte une partie radiale, active dans la première phase du mouvement, et une partie oblique, active dans la seconde phase.

Suivant un autre mode de réalisation de l'invention, le mouvement de l'organe d'actionnement n'est un déplacement radial que dans la première phase, et, dans la seconde phase, l'organe d'actionnement exécute une rotation sur l'axe radial dudit organe d'actionnement, cette rotation entraînant le déplacement du pêne par action d'une partie excentrique portée par ledit organe de commande.

De préférence, la partie de blocage de l'organe d'actionnement est une saillie dirigée axialement, et la partie complémentaire de la bague de commande est une cavité radiale dans laquelle pénètre ladite saillie, ou vice-versa.

Selon DE-A-3434308 précité, un ressort agit en permanence sur l'organe d'actionnement pour le pousser vers la première position, et il faut une action positive extérieure pour maintenir l'organe d'actionnement dans la seconde position.

Pour éviter cet inconvénient, l'invention prévoit encore que l'organe d'actionnement peut être immobilisé dans chacune des deux positions sans intervention d'une force extérieure, et peut être déplacé d'une position à une autre, et vice versa, seulement à l'aide d'une clé de forme adaptée.

Avantageusement, le mandrin comporte automatiquement des moyens pour emprisonner automatiquement la clé dans le mandrin quand l'organe d'actionnement est dans la seconde position.

Comme on peut le voir, ces deux modes de réalisation apportent une excellente sécurité, obtenue par des moyens purement mécaniques, à la différence des sécurités électriques ou autres actuellement en usage.

Dans la technique courante, les dents portées par le pêne et par la pièce de serrage ont une forme trapézoïdale. Cette forme a l'inconvénient de diminuer la précision avec laquelle est localisée radialement la pièce de serrage. Pour un plus grande sûreté, il est avantageux de prévoir que les dents du pêne sont à section carrée, ainsi que celles de la pièce de serrage, et que la pièce de support un poussoir à ressort disposé pour pénétrer dans un intervalle entre dents de la denture de la pièce de serrage, afin d'amener cette denture en correspondance avec les dents du pêne.

Avantageusement, la face de la pièce de serrage que est tournée vers la pièce de support porte, au-delà de l'extrémité de la denture, une partie à relief de même hauteur que les dents, mais dépourvue d'intervalles entre dents. On évite ainsi le risque d'avoir seulement un petit nombre de dents du pêne en prise avec la denture de la pièce de serrage.

L'invention va maintenant être exposée de façon plus détaillée à l'aide d'exemples pratiques illustrés par les dessins, parmi lesquels :

Figures 1 à 4 sont des coupes axiales d'un premier mode de réalisation, à des étapes différentes d'une opération de réglage de la position des pièces de serrage,

Figures 5 et 6 sont des vues analogues d'un second mode de réalisation et

Figures 7 et 8 sont respectivement des coupes partielles selon la ligne VII-VII de la figure 5 et la ligne VIII-VIII de la figure 6.

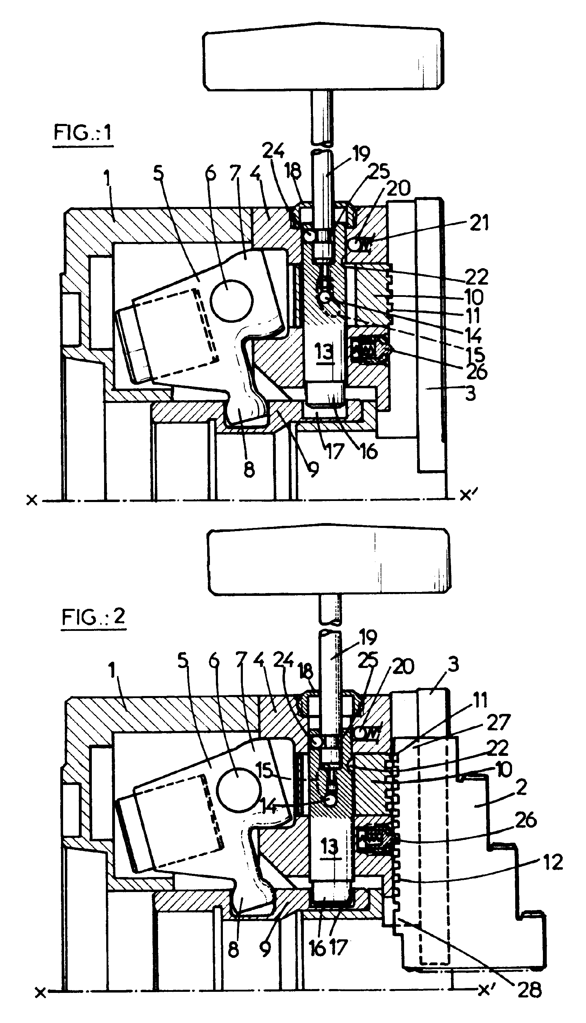

Le dispositif représenté aux figures 1 à 4 comporte un corps de mandrin 1, qui a la forme d'une pièce cylindrique, ayant un axe de symétrie x-x', en bas sur les figures. Ce corps est destiné à porter, dans l'exemple choisi, trois mors, mais il est évident que le nombre des mors peut être différent, par exemple deux ou quatre. Les mors sont disposés symétriquement par rapport à l'axe x-x', et les figures représentent seulement une demi-coupe, par le plan de symétrie d'un mors.

Une pièce de serrage 2, qui constitue le mors proprement dit, peut coulisser dans une glissière radiale, constituée par une rainure 3 à section en T. La face opposée du corps 1, à gauche sur les figures, est pourvue de moyens de fixation, non représentés, sur une machine-outil. Cette face sera, dans la suite, dénommée face arrière du support, la face qui porte les pièces de serrage étant, par conséquent, dénommée face avant.

En arrière des glissières 3, un logement orienté radialement contient une pièce de soutien 4, qui peut donc coulisser radialement dans ce logement par rapport au corps 1. Plus à l'arrière encore, une cavité du corps 1 contient un levier coudé 5, monté à pivot sur un axe 6, perpendiculaire au plan de symétrie du mors. Un premier bras 7 du levier 5 pénètre dans une cavité de la pièce de soutien 4, cependant que l'extrémité 8 de l'autre bras du levier 5 pénètre dans une cavité d'une bague de commande 9, coaxiale au corps 1, et mobile axialement à l'intérieur de celui-ci, sous l'action de moyens d'entraînement non représentés. La forme du levier 5 est calculée pour qu'un déplacement de la bague de commande 9 dans le sens axial entraîne un déplacement de la pièce de soutien 4 dans le sens radial.

La pièce de soutien 4 présente une cavité axiale dans laquelle peut se déplacer une pièce de liaison, ou pêne 10, en coulissant axialement. Le pêne 10 présente, à sa face avant, une série de dents 11, à section rectangulaire, conçues pour coopérer avec une denture 12 prévue sur la face arrière de la pièce de serrage 2. Il est clair que, lorsque les dents 11 sont en prise avec la denture 12, un mouvement radial de la pièce de support 4, correspondant à un déplacement axial de la bague de commande 9, a pour résultat un déplacement radial de la pièce de serrage 2, et assure ainsi le serrage d'une pièce à traiter, non représentée. Au contraire, si le pêne 10 est reculé vers l'arrière, de façon à désolidariser les dents 11 de la denture 12, la pièce de serrage 2 peut être déplacée axialement par rapport à la pièce de soutien 4, soit pour modifier la position relative de ces deux pièces suivant un pas égal à celui de la denture, soit pour enlever complètement la pièce de serrage 2, par exemple en vue de la remplacer par une autre.

Pour déplacer le pêne 10, il est prévu un organe d'actionnement consistant essentiellement en une tige radiale, ou plongeur 13, qui peut coulisser radialement dans un logement de la pièce de soutien 4. Le plongeur 13 est traversé par une goupille 14, dirigée perpendiculairement au plan de symétrie du mors, et qui pénètre, par ses deux extrémités, dans des rainures 15 du pêne. Ces rainures sont dirigées radialement dans leur partie la plus éloignée de l'axe x-x′, et obliquement dans leur partie la plus proche de cet axe. Cette partie inclinée des rainures 15 constitue une surface de came par laquelle la goupille 14 pousse le pêne 10 vers l'arrière lorsque le plongeur est enfoncé. Par ailleurs, le plongeur 13 comporte, à sa partie la plus proche de l'axe, un prolongement 16, dirigé radialement, et qui vient en face d'une cavité 17 de la bague de commande 9 lorsque celle-ci est dans la position correspondant au desserrage des pièces de serrage 2.

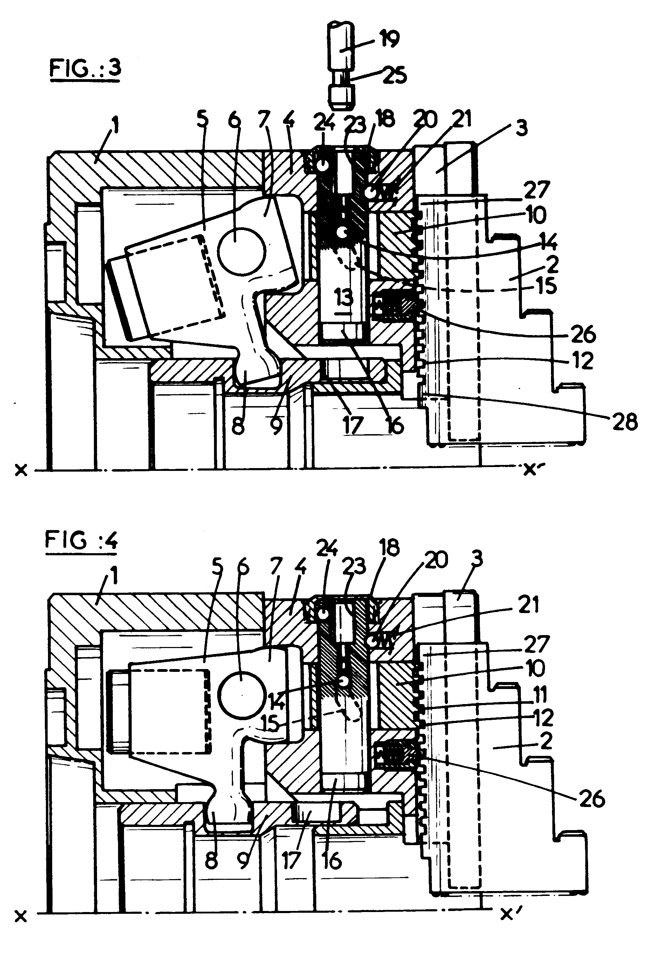

Si, partant d'une situation où le plongeur est radialement le plus écarté de l'axe x-x′, (figure 3), on enfonce progressivement celui-ci en direction de l'axe, pendant que la goupille 14 parcourt la partie radiale de la rainure 15, le plongeur avance jusqu'à pénétrer dans la cavité 17 de la bague de commande, comme indiqué à la figure 1. Ensuite, la continuation du mouvement fait enfoncer un peu plus la partie en saillie 16 dans la cavité 17, tout en faisant progresser la goupille 14 dans la partie oblique de la rainure 15, ce qui a pour effet de faire reculer le pêne 10, jusque dans la position indiquée à la figure 2.

Dans sa position la plus écartée de l'axe x-x′, représentée aux figures 3 et 4, le plongeur 13 vient en appui contre un bouchon 18 qui obture son logement radialement vers l'extérieur. Le bouchon 18 est percé en son centre d'un trou qui laisse le passage pour un clé 19. Dans cette même position extrême, le plongeur 13 est maintenu par une bille 20, poussée par un ressort 21 placé dans un logement dirigé axialement de la pièce d'appui 4. La bille 20 pénètre dans une encoche 22, visible à la figure 2, du plongeur 13, et l'empêche par conséquent de se déplacer en direction de l'axe x-x′.

A sa partie radialement extérieure, le plongeur 13 présente une cavité radiale 23, qui peut recevoir la tête de la clé 19. Une bille 24 peut se déplacer dans un logement orienté axialement de la paroi du plongeur entre une position où elle fait saillie sur la face extérieure du plongeur, et une position où elle fait saillie à l'intérieur de la cavité 23. Le logement du plongeur dans la pièce d'appui 4 présente, par ailleurs, un élargissement sous le bouchon 18. Lorsque la clé 19 est introduite dans la cavité 23, elle commence par repousser la bille 24 vers l'extérieur, dans l'élargissement du logement du plongeur. En continuant son avance, la clé arrive à une position où une gorge 25 de cette clé se trouve en face de la bille 24. Celle-ci pénètre alors dans cette gorge, et l'enfoncement ultérieur de la clé et du plongeur 13 solidarise alors celui-ci avec la clé, la bille 24 étant repoussée dans la gorge par la paroi du logement du plongeur. Lorsque l'ensemble formé par le plongeur et la clé est dans sa position extrême la plus proche de l'axe x-x′, cet ensemble est retenu dans cette position par les frottements correspondant à la partie oblique de la rainure 15, et n'a donc pas tendance à s'écarter radialement vers l'extérieur. Par ailleurs, un tel déplacement vers l'extérieur serait immédiatement détecté par le déplacement de la clé.

La pièce d'appui 4 porte, sur sa face avant, un poussoir à ressort 26, pourvu d'une extrémité apte à pénétrer dans l'intervalle entre deux dents de la denture 12. L'utilité de ce poussoir à ressort est de permettre une localisation précise de la denture 12 par rapport aux dents 11 du pêne. On notera que le fait que ce poussoir à ressort est porté par la pièce de soutien, combiné avec la forme rectangulaire des dents, n'induit aucune force sur le pêne lui-même, et ne tend donc pas à pousser les dents hors d'engagement, comme cela serait le cas dans la technique courante, où les dents sont de forme trapézoïdale.

Par ailleurs, de part et d'autre de la denture 12, deux zones 27, 28 prolongent les sommets des dents de cette denture, mais sans présenter d'intervalles entre-eux dans lesquels pourraient pénétrer des dents 11 du pêne. Grâce à cette disposition, il n'est pas possible qu'un fraction seulement des dents du pêne soit en prise avec la denture 12 : ou bien toutes les dents du pêne pénètrent dans des intervalles de la denture 12, ou bien le déplacement du pêne est impossible, ce qui se traduit par l'impossibilité de déplacer le poussoir 13 et, par conséquent, d'actionner la bague de commande 9, si bien qu'un risque d'incident est ainsi éliminé.

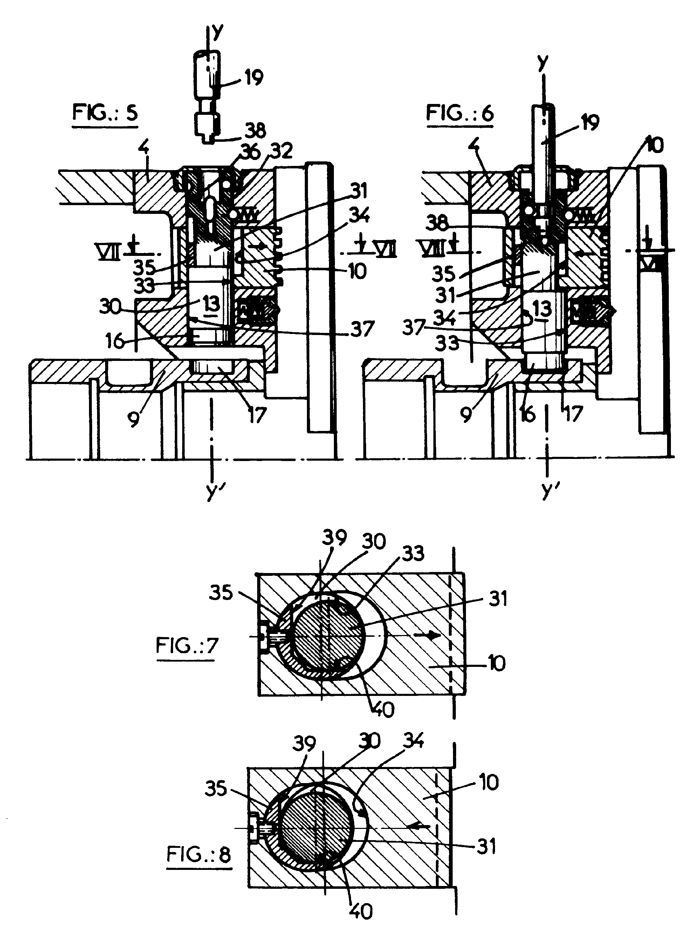

Le dispositif des figures 5 à 8 diffère de celui des figures 1 à 4 essentiellement par la forme du plongeur 13 et de son logement dans le pêne 10. Le plongeur 13 comporte une partie de tête 30 cylindrique, dirigée vers l'axe x-x′, et terminée par la partie en saillie 16, qui, comme dans la réalisation précédente, pénètre dans une cavité 17 de la bague de commande. La partie de tête 30 se raccorde à une partie intermédiaire 31, également cylindrique, mais de plus petit diamètre, et excentrée. Le plongeur se continue par une partie de queue 32, qui est en prolongement de la partie de tête.

Le pêne est traversé par un logement radial dont la première partie 33 la plus proche de l'axe est circulaire et de diamètre à peine supérieur à celui de la partie du tête 30. Le reste 34 du logement est de diamètre largement supérieur, mais il est en partie obstrué par une cale 35 dont la forme et la fonction ressortiront de ce qui va suivre, et qui est solidaire du pêne.

Les parties 30 et 32 du plongeur sont guidées dans des évidements cylindriques radiaux 36, 37 de la pièce de soutien 4.

Dans la position de figures 5 et 7, la partie de tête 30 du plongeur est engagée dans la première partie 34 du logement. La cale 35, en appui sur l'excentrique 31, empêche la rotation du plongeur autour de l'axe y-y' commun à la partie de tête 31 du plongeur et à la première partie 33 du logement dans le pêne.

Si on enfonce le plongeur pour passer à la disposition des figures 6 et 8, la partie de tête 31 du plongeur sort du pêne 10. Une rotation du plongeur sur son axe y-y' devient alors possible. L'excentrique 31 entraîne alors le pêne vers l'arrière par l'intermédiaire de la cale 35.

Comme on peut le voir à la figure 6, cette rotation ne devient possible qu'après que la saillie 16 a pénétré dans la cavité 17 pour immobiliser la bague de commande. La rotation de la partie de tête 30 fait que le bord de cette partie vient en appui contre le pêne et s'oppose à un déplacement du plongeur vers l'extérieur tant que l'excentrique n'est pas revenu à la position où les dents 11 sont en prise avec la denture 12.

La commande des mouvements du plongeur se fait à l'aide d'une clé 19 quine diffère de celle de la réalisation précédente que par le fait qu'elle présente une extrémité 38 en forme de tournevis pour entraîner le plongeur en rotation.

La cale 35 comporte un corps avec une surface de butée 39 perpendiculaire au plan de symétrie du mors, et une aile avec une surface de butée 40 perpendiculaire à la précédente. Ces deux surfaces de butée coopèrent avec l'excentrique 31. La surface de butée 40 sert essentiellement à empêcher une rotation de l'excentrique 31 de plus de 180° et à fournir à l'opérateur un repère de position précis pour la position du mors.

La surface de butée 39 sert au déplacement axial du pêne vers l'arrière. Lors du mouvement inverse, c'est la surface opposée de la partie 33 du logement qui sert à déplacer le pêne vers l'avant.

D'autres modalités sont, bien entendu, possibles. Par exemple, la transmission du mouvement de la bague de commande 9 à la pièce d'appui 4, peut être réalisée au moyen de surfaces de came, à la place de la transmission par levier coudé qui a été décrite.

On peut aussi prévoir de remplacer le système de commande des déplacements du pêne par plongeur à translation ou à translation et rotation par d'autres systèmes, par exemple ce qui sont décrits dans EP-A-0038749.

Il est encore possible de prévoir une commande simultanée des pênes correspondant à plusieurs mors avec un dispositif connu à bague tournante. Dans ce cas, c'est également cette bague qui portera les moyens de blocage de la bague de commande.

## Revendications

1. Mandrin de serrage pour machine-outil, dont chaque mors comporte :

— une pièce de support (4) montée coulissante dans une glissière radiale du corps (1) du mandrin,

— une pièce de serrage (2) montée coulissante dans une glissière radiale du corps (1) ou de la pièce de support (4),

— un pêne (10) mobile axialement dans la pièce support et pourvu de dents (11) capables de coopérer avec une denture (12) de la pièce de serrage pour immobiliser cette dernière par rapport à la pièce de support,

— un organe d'actionnement (13) mobile par rapport à la pièce de support (4) et capable de passer, par un mouvement radial, d'une première position, où il maintient le pêne (10) en situation de coopération avec la denture (12) de la pièce de serrage (2), à une seconde position, où il maintient le pêne (10) en situation de désaccouplement par rapport à la pièce de serrage (2), le pêne étant déplacé à l'aide d'une surface de came oblique (15) par rapport à la direction radiale,

— le mandrin comprenant en outre une bague de commande (9) qui peut opérer un coulissement axial, et des moyens (5) pour transformer ce coulissement axial en déplacement radial des pièces de support des mors par rapport au corps du mandrin,

— et l'organe d'actionnement (13) comportant une partie de blocage (16) qui coopère avec une partie (17) de forme complémentaire de la bague de commande (9), ces deux parties coopérant lorsque l'organe d'actionnement est dans la seconde position, et la bague de commande dans la position correspondante, pour empêcher le coulissement de ladite bague,

— le mouvement de l'organe d'actionnement (13) pour passer de la première position à la seconde position comprenant une première phase, dans laquelle la partie de blocage (16) vient coopérer avec la partie complémentaire (17) de la bague de commande, pour empêcher le coulissement de ladite bague, alors que le pêne est toujours maintenu en position, puis une seconde phase, dans laquelle il amène le pêne en situation de désaccouplement,

— le mouvement pour passer de la seconde position à la première comprenant, de façon correspondante, une phase de ré-accouplement du pêne suivie d'une phase de libération de la bague de commande,

caractérisé en ce que ladite surface de came (15) comporte une partie radiale, active dans la première phase du mouvement, et une partie oblique, active dans la seconde phase.

2. Mandrin de serrage pour machine-outil, dont chaque mors comporte :

— une pièce de support (4) montée coulissante dans une glissière radiale du corps (1) du mandrin,

— une pièce de serrage (2) montée coulissante dans une glissière radiale du corps (1) ou de la pièce de support (4),

— un pêne (10) mobile axialement dans la pièce support et pourvu de dents (11) capables de coopérer avec une denture (12) de la pièce de serrage pour immobiliser cette dernière par rapport à la pièce de support,

— un organe d'actionnement (13) mobile par rapport à la pièce de support et capable de passer d'une première position, où il maintient le pêne en situation de coopération avec la denture de la pièce de serrage, à une seconde position, où il maintient le pêne en situation de désaccouplement par rapport à la pièce de serrage,

— le mandrin comprenant en outre une bague de commande (9) qui peut opérer un coulissement axial, et des moyens (5) pour transformer ce coulissement axial en déplacement radial des pièces de support des mors par rapport au corps du mandrin,

— et l'organe d'actionnement (13) comportant une partie de blocage (16) qui coopère avec une partie (17) de forme complémentaire de la bague de commande (9), ces deux parties coopérant lorsque l'organe d'actionnement est dans la seconde position, et la bague de commande dans la position correspondante, pour empêcher le coulissement de ladite bague,

— le mouvement de l'organe d'actionnement (13) pour passer de la première position à la seconde position comprenant une première phase, dans laquelle la partie de blocage (16), par un déplacement radial, vient coopérer avec la partie complémentaire (17) de la bague de commande, pour empêcher le coulissement de ladite bague, alors que le pêne est toujours maintenu en position, puis une seconde phase, dans laquelle il amène le pêne en situation de désaccouplement,

— le mouvement pour passer de la seconde position à la première comprenant, de façon correspondante, une phase de ré-accouplement du pêne suivie d'une phase de libération de la bague de commande,

caractérisé en ce que dans la seconde phase, l'organe d'actionnement (13) exécute une rotation sur l'axe radial (y-y') dudit organe d'actionnement (13), cette rotation entraînant le déplacement du pêne (10) par action d'une partie excentrique (31) portée par ledit organe d'actionnement.

3. Mandrin selon la revendication 1 ou 2, caractérisé en ce que ladite partie de blocage de l'organe d'actionnement est une saillie (16) dirigée axialement, et la partie complémentaire de la bague de commande (9) est une cavité radiale (17) dans laquelle pénètre ladite saillie, ou vice-versa.

4. Mandrin selon l'une des revendications 1 à 3, caractérisé en ce que l'organe d'actionnement (13) peut être immobilisé dans chacune des deux positions sans intervention d'une force extérieure, et peut être déplacé d'une position à une autre et vice-versa seulement à l'aide d'une clé (19) de forme adaptée.

5. Mandrin selon la revendication 4, caractérisé en ce qu'il comporte des moyens pour emprisonner automatiquement la clé (19) dans le mandrin quand l'organe d'actionnement (13) est dans la seconde position.

6. Mandrin selon la revendication 5, caractérisé en ce que l'organe d'actionnement comporte une partie tubulaire dans laquelle peut s'engager la clé et une bille (24) mobile dans un passage transversal de cette partie tubulaire, cette bille pénétrant dans une gorge de la clé en étant poussée par la paroi du logement de l'organe d'actionnement quand celui-ci n'est pas dans la première position, pour solidariser la clé avec ledit organe d'actionnement, et libérant la clé en pénétrant dans un élargissement dudit logement seulement quand l'organe d'actionnement est dans la première position.

7. Mandrin selon l'une des revendications 1 à 6, caractérisé en ce que les dents du pêne sont à section carrée, ainsi que celles de la pièce de serrage, et en ce que la pièce de support porte un poussoir à ressort (26) disposé pour pénétrer dans un intervalle entre dents de la denture de la pièce de serrage, afin d'amener cette denture en correspondance avec les dents du pêne.

8. Mandrin selon l'une des revendications 1 à 7, caractérisé en ce que la face de la pièce de serrage gui est tournée vers la pièce de support comporte, au-delà de l'extrémité de la denture, une partie (27, 28) de même relief que les dents, mais dépourvue d'intervalles entre les dents.

**Patentansprüche**

1. Spannfutter für Werkzeugmaschine, dessen Backen jeweils aufweisen :

— einen Halterungsteil (4), der in einer radialen Gleitschiene des Korpus (1) des Futters verschiebbar montiert ist,

— einen Spannteil (2), der in einer radialen Gleitführung des Korpus (1) oder des Halterungsteils (4) verschiebbar montiert ist,

— einen Riegel (10), der in dem Halterungsteil axial bewegbar und mit Zähnen (11) versehen ist, die mit einer Zahnung (12) des Spannteiles zusammenarbeiten können, um den letztgenannten Teil im Hinblick auf den Halterungsteil unbeweglich zu haltern,

— ein Betätigungsorgan (13), welches im Hinblick auf den Halterungsteil (4) bewegbar ist und durch eine radiale Bewegung aus einer ersten Position, in welcher er den Riegel (10) in Eingriffslage mit der Zahnung (12) des Spannteiles (2) hält, in eine zweite Position bewegbar ist, in welcher er den Riegel (10) im Hinblick auf den Spannteil (2) in Auskupplungslage hält, wobei der Riegel mit Hilfe einer Oberfläche eines im Hinblick auf die radiale Richtung schräg gerichteten Nockens (15) verschiebbar ist,

— wobei das Futter darüber hinaus einen Steuerring (9), der eine Axialbewegung ausführen kann, und Einrichtungen (5) aufweist, um diese Axialbewegung in eine radiale Verschiebung der Halterungsteile der Backen im Hinblick auf den Korpus des Futters umwandelt,

— und das Betätigungsorgan (13) einen Blockierteil (16) aufweist, der mit einem Teil (17) in komplementärer Form des Steuerrings (9) zusammenarbeitet, wobei diese beiden Teile zusammenarbeiten, wenn das Betätigungsorgan sich in der zweiten Position und der Steuerring sich in der entsprechenden Position befindet, um die Verschiebung des Steuerringes zu verhindern,

— wobei die Bewegung des Steuerorganes (13), um von der ersten in die zweite Position zu gelangen, eine erste Phase aufweist, in welcher der Blockierteil (16) mit dem komplementären Teil (17) des Steuerringes zusammenarbeitet, um die Bewegung des Steuerringes zu verhindern, während der Riegel fortwährend in Stellung gehalten bleibt, bis eine zweite Phase auftritt, in welcher er den Riegel in ausgekuppelte Stellung bringt,

— und wobei die Bewegung, um in entsprechender Weise aus der zweiten in die erste Position zu gelangen, eine Phase des Wiedereinkuppelns des Riegels aufweist, welcher eine Phase der Befreiung des Steuerringes folgt,

dadurch gekennzeichnet, daß die bereits erwähnte Oberfläche des Nockens (15) einen radialen in der ersten Phase der Bewegung aktiven Teil und einen schräg gerichteten in der zweiten Phase aktiven Teil aufweist.

2. Spannfutter für Werkzeugmaschine, dessen Backen jeweils aufweisen :

— einen Halterungsteil (4), der in einer radialen Gleitschiene des Korpus (1) des Futters verschiebbar montiert ist,

— einen Spannteil (2), der in einer radialen Gleitführung des Korpus (1) oder des Halterungsteils (4) verschiebbar montiert ist,

— einen Riegel (10), der in dem Halterungsteil axial bewegbar und mit Zähnen (11) versehen ist, die mit einer Zahnung (12) des Spannteiles zusammenarbeiten können, um den letztgenannten Teil im Hinblick auf den Halterungsteil unbeweglich zu haltern,

— ein Betätigungsorgan (13), welches im Hinblick auf den Halterungsteil (4) bewegbar ist und aus einer ersten Position, in welcher er den Riegel (10) in Eingriffslage mit der Zahnung (12) des Spannteiles (2) hält, in eine zweite Position bewegbar ist, in welcher er den Riegel (10) im Hinblick auf den Spannteil (2) in Auskupplungslage hält,

— wobei das Futter darüber hinaus einen Steuerring (9), der eine Axialbewegung ausführen kann, und Einrichtungen (5) aufweist, um diese Axialbewegung in eine radiale Verschiebung der Halterungsteile der Backen im Hinblick auf den Korpus des Futters umwandelt,

— und das Betätigungsorgan (13) einen Blockierteil (16) aufweist, der mit einem Teil (17) in komplementärer Form des Steuerrings (9) zusammenarbeitet, wobei diese beiden Teile zusammenarbeiten, wenn das Betätigungsorgan sich in der zweiten Position und der Steuerring sich in der entsprechenden Position befindet, um die Verschiebung des Steuerringes zu verhindern,

— wobei die Bewegung des Steuerorganes (13), um von der ersten in die zweite Position zu gelangen, eine erste Phase aufweist, in welcher der Blockierteil (16) mit dem komplementären Teil (17) des Steuerringes zusammenarbeitet, um die Bewegung des Steuerringes zu verhindern, während der Riegel fortwährend in Stellung gehalten bleibt, bis eine zweite Phase auftritt, in welcher er den Riegel in ausgekuppelte Stellung bringt,

— und wobei die Bewegung, um in entsprechender Weise aus der zweiten in die erste Position zu gelangen, eine Phase des Wiedereinkuppelns des Riegels aufweist, welcher eine Phase der Befreiung des Steuerringes folgt,

dadurch gekennzeichnet, daß in der zweiten Phase das Betätigungsorgan (13) eine Drehung um die Radialachse (y-y') des Betätigungsorgans (13) ausführt und durch diese Drehung die Verschiebung des Riegels (10) unter Einwirkung eines exzentrischen an dem Betätigungsorgan angebrachten Teils (31) bewerkstelligt wird.

3. Futter nach einem der Ansprüche 1 oder 2, dadurch gekennzeichnet, daß der bereits genannte Blockierteil des Betätigungsorganes ein axial ausgerichteter Vorspruch (16) ist und daß der konplementäre Teil des Steuerteiles (9) ein radialer Hohlraum (17) ist, in welchen der vorgenannte Vorspruch eindringt, oder umgekehrt.

4. Futter nach einem der Ansprüche 1 bis 3, dadurch gekennzeichnet, daß das Betätigungsorgan (13) in jeder der beiden Positionen ohne Eingriff einer äußeren Kraft festgelegt werden kann und aus der einen Position in die andere und umgekehr einzig und allein mit Hilfe eines Schlüssels (19) mit angepaßter Form bewegbar ist.

5. Futter nach Anspruch 4, dadurch gekennzeichnet, daß es Mittel aufweist, um den Schlüssel (19) automatisch im Futter zu umschließen, wenn das Betätigungsorgan (13) sich in der zweiten Position befindet.

6. Futter nach Anspruch 5, dadurch gekennzeichnet, daß das Betätigungsorgan einen rohrförmigen Teil, in welchem der Schlüssel in Eingriff treten kann, und eine Kugel (24) aufweist, die in einem Querdurchgang des rohrförmigen Teils bewegbar ist, wobei diese Kugel in eine Kehle des Schlüssels eindringt, wenn sie durch die Wandung des Raumes des Steuerorganes gedrückt wird, wenn dieses sich nicht in der zweiten Position befindet, um den Schlüssel mit dem Betätigungsorgan fest zu verbinden, und um den Schlüssel freizugeben, indem dieser in eine Vergrößerung des Raumes eintritt, und zwar einzig und allein, wenn das Betägigungsorgan sich in der zweiten Position befindet.

7. Futter nach einem der Ansprüche 1 bis 6, dadurch gekennzeichnet, daß die Zähne des Riegels ebenso, wie jene des Spannteils einen eckigen Querschnitt aufweisen und daß der Halterungsteil einen Federdruckteil (26) aufweist, der so angeordnet ist, daß er in ein Intervall zwischen Zähnen der Zahnung des Spannteiles eindringt, um diese Zahnung in Übereinstimmung mit den Zähnen des Riegels auszurichten.

8. Futter nach einem der Ansprüche 1 bis 7, dadurch gekennzeichnet, daß diejenige Fläche des Spannteils, die auf den Halterungsteil gerichtet ist, jenseits der Begrenzung der Zahnung einen Teil (27, 28) mit der gleichen Kontur wie die Zähne aufweist, der jedoch nicht mit Zwischenräumen zwischen den Zähnen versehen sind.

## Claims

1. Clamping chuck for a machine tool, each jaw of which comprises :
— a support piece (4) slidably mounted in a radial groove in the chuck body (1),
— a clamping part (2) slidably mounted in a radial groove in the body (1) or the support piece (4),
— a bolt (10) movable axially inside the support piece and provided with teeth (11) capable of cooperating with a toothing (12) on the clamping part so as to fix the latter relative to the support piece,
— an actuating member (13) movable relative to the support piece (4) and capable of passing by means of a radial movement from a first position, where it keeps the bolt (10) engaged with the toothing (12) of the clamping part (2), to a second position, where it keeps the bolt (10) disengaged relative to the clamping part (2), the bolt (10) being displaced with the aid of a cam surface (15) oblique with respect to the radial direction,
— the chuck comprising moreover an operating ring (9) which is able to perform an axial sliding action, and means (5) for transforming this axial sliding action into radial displacement of the support pieces of the jaws relative to the chuck body,
— and the actuating member (13) comprising a locking part (16) which cooperates with a part (17) of the operating ring (9) having a matching shape, these two parts cooperating when the actuating member is in the second position, and the operating ring in a corresponding position, so as to prevent sliding of said ring,
— the movement of the actuating member (13) in order to pass from the first position to the second position comprising a first phase, during which the locking part (16) cooperates with the matching part (17) of the operating ring, so as to prevent sliding of said ring, while the bolt is still held in position, then a second phase, during which said actuating member brings the bolt into a disengaged position,
— the movement for passing from the second position to the first position comprising, correspondingly, a phase where the bolt is re-engaged followed by a phase where the operating ring is released, characterised in that said cam surface (15) comprises a radial part, active during the first phase of the movement, and an oblique part, active during the second phase.

2. Clamping chuck for a machine tool, each jaw of which comprises :
— a support piece (4) slidably mounted in a radial groove in the chuck body (1),
— a clamping part (2) slidably mounted in a radial groove in the body (1) or the support piece (4),
— a bolt (10) movable axially inside the support piece and provided with teeth (11) capable of cooperating with a toothing (12) on the clamping part so as to fix the latter relative to the support piece,
— an actuating member (13) movable relative to the support piece and capable of passing from a first position, where it keeps the bolt engaged with the toothing of the clamping part, to a second position, where it keeps the bolt disengaged relative to the clamping part,
— the chuck comprising moreover an operating ring (9) which is able to perform an axial sliding action, and means (5) for transforming this axial sliding action into radial displacement of the support pieces of the jaws relative ot the chuck body,
— and the actuating member (13) comprising a locking part (16) which cooperates with a part (17) of the operating ring (9) having a matching shape, these two parts cooperating when the actuating member is in the second position, and the operating ring in a corresponding position, so as to prevent sliding of said ring,

— the movement of the actuating member (13) in order to pass from the first position to the second position comprising a first phase, during which the locking part (16), by means of a radial displacement, cooperates with the matching part (17) of the operating ring, so as to prevent sliding of said ring, while the bolt is still held imposition, then a second phase, during which said actuating member brings the bolt into a disengaged position,

— the movement for passing from the second position to the first position comprising, correspondingly, a position where the bolt is re-engaged followed by a phase where the operating ring is released, characterised in that during the second phase, the actuating member (13) performs a rotation about the radial axis (y-y') of said actuating member (13), this rotation causing displacement of the bolt (10) owing to the action of an eccentric part (31) mounted on said actuating member.

3. Chuck according to Claim 1 or 2, characterised in that said locking part of the actuating member is an axially oriented projection (16), and the matching part of the operating ring (9) is a radial cavity (17) into which said projection penetrates, of vice versa.

4. Chuck according to one of Claims 1 to 3, characterised in that the actuating member (13) may be fixed in each of the two positions without the intervention of an external force and may be moved from one position to another and vice versa only by means of a key (19) with a suitable shape.

5. Chuck according to Claim 4, characterised in that it has means for automatically holding the key (19) inside the chuck when the actuating member (13) is in the second position.

6. Chuck according to Claim 5, characterised in that the actuating member comprises a tubular part inside which the key is able to engage and a ball (24) movable inside a transverse passage of this tubular part, this ball entering into a neck in the key, being pushed by the wall of the seating of the actuating member when the latter is not in the first position, so as to lock the key together with said actuating member, and releasing the key by penetrating into a widened portion of said seating only when the actuating member is in the first position.

7. Chuck according to one of Claims 1 to 6, characterised in that the teeth of the bolt, as well as those of the clamping part, have a square cross-section, and the support piece accommodates a spring-loaded push-piece (26) arranged so as to penetrate into a tooth space in the toothing of the clamping part, so as to cause this toothing to engage with the teeth of the bolt.

8. Chuck according to one of Claims 1 to 7, characterised in that the side of the clamping part facing the support piece has, beyond the end of the toothing, a part (27, 28) with the same relief as the teeth, but without spaces between the teeth.

FIG.:1

FIG.:2

**FIG.:3**

**FIG :4**

FIG.: 5

FIG.: 6

FIG.: 7

FIG.: 8